# EUROPÄISCHE PATENTSCHRIFT

(11) **EP 1 831 275 B1**
(45) Veröffentlichungstag und Bekanntmachung des Hinweises auf die Patenterteilung: **30.04.2008**
(21) Anmeldenummer: 05850261.8
(22) Anmeldetag: 13.12.2005
(51) Int. Cl.: C08G 18/10, C08G 18/48, C08K 7/04

(54) **VERSTÄRKTE POLYURETHANHARNSTOFFELASTOMERE UND DEREN VERWENDUNG**
REINFORCED POLYURETHANE UREA ELASTOMERS AND USE THEREOF
ELASTOMERES POLYURETHANE-UREE RENFORCES ET LEUR UTILISATION

(30) Priorität: 24.12.2004 DE 102004062539
(43) Veröffentlichungstag der Anmeldung: 12.09.2007
(73) Patentinhaber: Bayer MaterialScience AG, 51368 Leverkusen (DE)
(72) Erfinder: HAAS, Peter, 42781 Haan (DE); ARNTZ, Hans-Detlef, 53797 Lohmar (DE)
(86) Internationale Anmeldenummer: PCT/EP2005/013368
(87) Internationale Veröffentlichungsnummer: WO 2006/069624

(56) Entgegenhaltungen:
- EP-A- 0 700 946
- EP-A- 1 004 606
- EP-A- 1 369 444

## Beschreibung

Die Erfindung betrifft verstärkte Polyurethanharnstoff-Elastomere mit einem bestimmten Harnstoff und einem bestimmten Urethananteil sowie daraus herstellbare flächige Polyurethanformkörper mit hoher Oberflächenenergie und guter Lackhaftung und deren Verwendung.

Die Herstellung von Polyurethanharnstoff-Elastomeren durch Umsetzung von NCO-Semiprepolymeren mit Gemischen aus aromatischen Diaminen sowie höhermolekularen Hydroxy- oder Aminogruppen enthaltenden Verbindungen ist bekannt und beispielsweise in US-A 5 418 260 und EP-A 656 380 beschrieben. Um bestimmte mechanische Eigenschaften bei den daraus hergestellten Formkörpern zu erreichen, müssen den Reaktionskomponenten Verstärkungsstoffe zugesetzt werden, wodurch insbesondere thermomechanische Eigenschaften verbessert und der Biege-Elastizitäts-Modul erheblich angehoben wird. Wünschenswert sind für solche verstärkte Polyurethanharnstoff-Elastomere, die zur Herstellung von flächigen Formkörpern, wie Kotflügel, Türen, Heckklappen sowie Schwellern von Automobilen eingesetzt werden, dass sich diese Teile gut von den Formen trennen lassen, um möglichst kleine Taktzeiten durch ein trennfreundliches System zu gewährleisten.

Trennfreundliche Systeme haben jedoch den Nachteil einer niedrigen Oberflächenspannung bedingt durch die Trennmittel. Um eine gute Lackhaftung zu erzielen, sind Oberflächenspannungen von 40 - 42 mN/m erforderlich, während hier nur 34 mN/m vorliegen. Werte um 42 mN/m werden erst durch zusätzliche Reinigungsverfahren erreicht.

Aufgabe es daher, verstärkte Polyurethanharnstoffelastomere zur Verfügung zu stellen, die gute thermomechanische Eigenschaften, gute Trenneigenschaften und gleichzeitig hohe Oberflächenspannungen aufweisen, so dass die aus diesen Elastomeren hergestellten Formteile gut lackierfähig sind.

Es wurde nun überraschend gefunden, dass bestimmte, mit Verstärkungsstoffen ausgerüstete Polyurethanhamstoff-Elastomere eine problemlose Verarbeitung hinsichtlich der Herstellung von flächigen Formkörpern mit einwandfreier Oberfläche und gutem Entformungsverhalten, verbunden mit einer hohen Oberflächenspannung, wie sie für eine gute Lackhaftung erforderlich ist, gewährleisten.

Gegenstand der vorliegenden Erfindung sind durch Verstärkungsstoffe ausgerüstete Polyurethanharnstoff-Elastomere mit einem Harnstoffanteil im Bereich von 70 bis 95 Mol-% und einem Urethananteil im Bereich von 5 bis 30 Mol-%, bezogen auf Mol-% eines NCO-Äquivalents, erhältlich durch Umsetzung eines Reaktionsgemisches aus einer A-Komponente bestehend aus
A1) aromatischen Diaminen, die zumindest in jeweils einer ortho-Stellung zu den Aminogruppen einen Alkylsubstituenten aufweisen,
A2) einer aliphatischen Reaktionskomponente bestehend aus mindestens einem Hydroxyl- und/oder primäre Aminogruppen aufweisenden Polyetherpolyol der Molmasse 500 bis 18 000,
A3) gegebenenfalls aliphatischen Aminen,
A4) Verstärkungsstoffen sowie
A5) gegebenenfalls Katalysatoren und/oder Zusatzstoffen
A6) mindestens einem Metallsalz aus der Gruppe bestehend aus Verbindungen, die erhältlich sind aus
   i) den Metallen Li, Mg, Ca, Ba, Zn, Cu, Fe, Co, Ni und
   ii) Carbonsäuren mit 8 bis 40 C-Atomen, Phosphor enthaltenden Säuren mit 8 bis 40 C-Atomen oder Schwefel enthaltenden Säuren mit 8 bis 40 C-Atomen,
sowie einem Prepolymer als B-Komponente erhältlich aus
B1) einer Polyisocyanatkomponente bestehend aus einem verflüssigten Polyisocyanat oder Polyisocyanatgemisch der Diphenylmethanreihe und
B2) einer Polyolkomponente mit einer mittleren Molmasse von 500 bis 18 000, bestehend aus mindestens einem, gegebenenfalls organische Füllstoffe enthaltenden Polyetherpolyol,
dadurch gekennzeichnet, dass die Komponenten A2) und B2) eine Funktionalität von 2 bis 8 sowie einen Ethylenoxid-Gehalt von 40-100 Gew.-% und einen Allcyloxiran-Gehalt von 0-60 Gew.-% aufweisen, wobei die A-Komponente und die B-Komponente in einem solchen stöchiometrischen Mengenverhältnis umgesetzt werden, dass die Isocyanatkennzahl des erhaltenen Elastomeren im Bereich von 80 bis 120 liegt und die über die B-Komponente eingebrachte Polyolkomponente B2) 10 bis 90 Mol-% des Urethananteils darstellt.

Die Salze A6) können gegebenenfalls in der Komponente A3) gelöst eingesetzt werden.

Bevorzugt werden verstärkte Polyurethanharnstoff-Elatomere mit einem Harnstoffanteil von 75 bis 95 Mol-% und einem Urethananteil von 5 bis 25 Mol-%, bezogen auf Mol-% eines NCO-Äquivalents.

Ein weiterer Gegenstand der Erfindung sind Polyurethankörper/-teile aus den erfindungsgemäßen Polyurethanharnstoffelastomeren.

Als Komponente A6) seien beispielhaft Zinkstearat, Zinkpalmitat, Zinklaurat, Zinkdioctylphosphat, Zinkdidecylphosphat, Magnesiumstearat und Magnesiumdioctylphosphat genannt.

Es ist weiterhin bevorzugt, dass die A-Komponente und die B-Komponente in einem solchen Mengenverhältnis umgesetzt werden, dass die Isocyanatkennzahl des erhaltenen Elastomeren bevorzugt im Bereich von 90 bis 115 liegt und die über die B-Komponente eingebrachte Polyolkomponente B2) 30 bis 85 % des Urethananteils darstellt.

Durch Verwendung der Komponenten A2) und B2) mit einem Ethylenoxid-Gehalt von 40 - 100 Gew.-%, bevorzugt 50 - 90 Gew.-% und 0 - 60 Gew.-%, besonders bevorzugt 10 - 50 Gew.-% eines Alkyloxirans, wie z.B. Propylenoxid (Methyloxiran), Ethyloxiran, Propyloxiran, Butyloxiran und den Metallsalzen A6) werden sehr gute Trenneigenschaften und eine hohe Oberflächenspannung von über 40 mN/m für die erfindungsgemäßen Polyurethanharnstoffelastomeren erhalten, wie sie für eine gute Lackhaftung erforderlich sind.

Oberflächenenergien bzw. Oberflächenspannungen in dieser Größenordnung werden bei Elastomeren, die A6) enthalten und auf der Basis der Komponenten A2) und B2) aufgebaut sind, mit einem Alkyloxiran-Gehalt von 60 bis 100 Gew.-% nicht erreicht, sondern nur Werte von 35 mN/m. Erst durch aufwändige Waschvorgänge werden Elastomere mit Oberflächenspannungswerten von etwa 40 mN/m erhalten.

Als Verstärkungsstoffe A4) werden bevorzugt solche Verstärkungsstoffe eingesetzt, die anorganischer Natur sind und eine Plättchen- und/oder Nadelstruktur aufweisen. Insbesondere handelt es sich dabei um Silikate der II. und III. Hauptgruppe des Periodensystems, wie Calciumsilikat vom Wollastonittyp und Aluminiumsilikate vom Glimmer- oder Kaolintyp. Solche silikatischen Verstärkungsstoffe sind bekannt unter der Bezeichnung Gruppen-, Ring-, Ketten- oder Bandsilikate z.B. in Hollemann-Wiberg, W. de Gruyter Verlag (1985) 768 bis 778 beschrieben.

Diese Verstärkungsstoffe weisen einen Durchmesser bzw. eine Tafelhöhe oder Dicke von 2 bis 30 µm sowie eine Längenausdehnung von 10 bis 600 µm auf und haben einen Längen-/Durchmesserquotienten der im Bereich 5:1 bis 35:1, bevorzugt 7:1 bis 30:1, liegt. Der Durchmesser kugeliger Anteile liegt bei 5 bis 150, bevorzugt 20 bis 100 µm.

Die genannten Verstärkungsstoffe werden üblicherweise in Mengen von 10 bis 35 Gew.-%, bevorzugt 10 bis 30 Gew.-%, bezogen auf die Gesamtmenge der Komponenten A und B zugesetzt.

Als Komponente A1) kommen aromatische Diamine in Betracht, die zumindest in jeweils einer ortho-Stellung zu den Aminogruppen einen Alkylsubstituenten aufweisen und die ein Molekulargewicht von 122 bis 400 besitzen. Besonders bevorzugt sind solche aromatischen Diamine, die in ortho-Stellung zu der ersten Aminogruppe mindestens einen Alkylsubstituenten und in ortho-Stellung zu der zweiten Aminogruppe zwei Alkylsubstituenten mit jeweils 1 bis 4, vorzugsweise 1 bis 3, Kohlenstoffatomen aufweisen. Ganz besonders bevorzugt sind solche, die in jeweils mindestens einer ortho-Stellung zu den Aminogruppen einen Ethyl-, n-Propyl- und/oder iso-Propylsubstituenten und gegebenenfalls in weiteren ortho-Stellungen zu den Aminogruppen Methylsubstituenten aufweisen. Beispiele für derartige Diamine sind 2,4-Diaminomesitylen, 1,3,5-Triethyl-2,4-diaminobenzol sowie dessen technische Gemische mit 1-Methyl-3,5-diethyl-2,6-diaminobenzol oder 3,5,3',5'-Tetraisopropyl-4,4'-diaminodiphenylmethan. Selbstverständlich können die Gemische untereinander ebenfalls eingesetzt werden. Besonders bevorzugt handelt es sich bei der Komponente A1) um 1-Methyl-3,5-diethyl-2,4-diaminobenzol oder um dessen technische Gemische mit 1-Methyl-3,5-diethyl-2,6-diaminobenzol (DETDA).

Die Komponente A2) besteht aus mindestens einem aliphatisch gebundenen Hydroxyl- und/oder primäre Aminogruppen aufweisenden Polyetherpolyol der Molmasse 500 bis 18 000, bevorzugt 1000 bis 16 000, vorzugsweise 1500 bis 15 000. Die Komponente A2) besitzt die zuvor erwähnten Funktionalitäten. Die Polyetherpolyole können in an sich bekannter Art durch Alkoxylierung von Startermolekülen oder deren Gemischen entsprechender Funktionalität hergestellt werden, wobei zur Alkoxylierung insbesondere Ethylenoxid sowie untergeordnet Alkyloxirane, wie Propylenoxid verwendet werden. Geeignete Starter bzw. Startergemische sind Succrose, Sorbit, Pentaerythrit, Gycerin, Trimethylenpropan, Propylenglykol sowie Wasser. Bevorzugt sind solche Polyetherpolyole, deren Hydroxygruppen zumindestens zu 50 %, vorzugsweise mindestens zu 70 %, insbesondere ausschließlich aus primären Hydroxygruppen bestehen. In Betracht kommen hier auch solche Polyetherpolyole, die gegebenenfalls organische Füllstoffe in dispergierter Form enthalten. Bei diesen dispergierten Füllstoffen handelt es sich beispielsweise um Vinylpolymerisate, wie sie durch Polymerisation von Acrylnitril und Styrol in Polyetherpolyolen als Reaktionsmedium entstehen (US-PS 33 83 351, 33 04 273, 35 23 093, 31 10 695, DE-PS 11 52 536), oder um Polyharnstoffe oder Polyhydrazide, wie sie durch eine Polyadditionsreaktion in Polyetherpolyolen als Reaktionsmedium aus organischen Diisocyanaten und Diaminen bzw. Hydrazin entstehen (DE-PS 12 60 142, DE-OS 24 23 984, 25 19 004, 25 13 815, 25 50 833, 25 50 862, 26 33 293, 25 50 796).

Solche Polyether sind beispielsweise beschrieben in Kunststoffhandbuch 7, Becker/Braun, Carl Hanser Verlag, 3. Auflage, 1993.

Weiterhin können als Komponente A2) primäre Aminogruppen aufweisende Polyetherpolyole eingesetzt werden, wie sie beispielsweise beschrieben werden in EP-A 219 035 und als ATPE (Amino-terminierte Polyether) bekannt sind.

Insbesondere eignen sich als Komponente A3) die sogenannten Jeffamine^{®} der Firma Texaco, die aus α,ω-Diaminopolypropylenglykolen aufgebaut sind.

Als Komponente A5) können die bekannten Katalysatoren für die Urethan- und Harnstoffreaktion eingesetzt werden, wie tertiäre Amine oder die Zinn(II)- oder Zinn(IV)-Salze höherer Carbonsäuren. Als weitere Zusatzstoffe kommen Stabilisatoren, wie die bekannten Polyethersiloxane oder Trennmittel, zum Einsatz. Die bekannten Katalysatoren oder Zusatzstoffe sind beispielsweise beschrieben in Kapitel 3.4 des Kunststoffhandbuchs 7, Polyurethane, Carl Hanser Verlag (1993), S. 95 bis 119 und können in den üblichen Mengen eingesetzt werden.

Die sogenannte B-Komponente stellt ein NCO-Prepolymer auf Basis der Polyisocyanatkomponente B1) und der Polyolkomponente B2) dar und weist einen NCO-Gehalt von 8 bis 26 Gew.-%, vorzugsweise 12 bis 25 Gew.-%, aus.

Bei den Polyisocyanaten B1) handelt es sich um gegebenenfalls durch chemische Modifizierung verflüssigte Polyisocyanate oder Polyisocyanatgemische der Diphenylmethanreihe. Der Begriff "Polyisocyanat der Diphenylmethanreihe" stellt den Oberbegriff für alle Polyisocyanate dar, wie sie bei der Phosgenierung von Anilin/ Formaldehyd-Kondensaten gebildet werden und in den Phosgenierungsprodukten als Einzelkomponenten vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, für die Gemische, die bei der destillativen Auftrennung derartiger Gemische als Destillat oder Destillationsrückstand anfallen und für beliebige Abmischungen von Polyisocyanaten der Diphenylmethanreihe.

Typische Beispiele für geeignete Polyisocyanate B1) sind 4,4'-Diisocyanatodiphenylmethan, dessen Gemische mit 2,2'- und insbesondere 2,4'-Diisocyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen, durch partielle Carbodiimidisierung der Isocyanatgruppen der genannten Di- und/oder Polyisocyanate modifizierte Di- und/oder Polyisocyanate oder beliebige Gemische derartiger Polyisocyanate.

Als Komponente B2) geeignet sind insbesondere die dieser Definition entsprechenden Polyetherpolyole bzw. Gemische derartiger Polyhydroxylverbindungen. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-PS 33 83 351, 33 04 273, 35 23 093, 31 10 695, DE-PS 11 52 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-PS 12 60 142, DE-OS 24 23 984, 25 19 004, 25 13 815, 25 50 833, 25 50 862, 26 33 293 oder 25 50 796). Grundsätzlich sind als Komponente B2) Polyetherpolyole der bereits oben unter A2) genannten Art geeignet, sofern sie den zuletzt genannten Kenndaten entsprechen.

Die Polyolkomponente B2) weist eine mittlere Molmasse von bevorzugt 1000 bis 16 000, insbesondere 2000 bis 16 000, bei einer mittleren Hydroxyfunktionalität von 2 bis 8, bevorzugt 3 bis 7 auf.

Zur Herstellung der NCO-Semiprepolymeren B) werden vorzugsweise die Komponenten B1) und B2) in solchen Mengenverhältnissen zur Reaktion gebracht (NCO-Überschuß), dass NCO-Semiprepolymere mit dem oben genannten NCO-Gehalt resultieren. Die diesbezügliche Umsetzung erfolgt im Allgemeinen innerhalb des Temperaturbereichs von 25 bis 100°C. Bei der Herstellung der NCO-Semiprepolymeren wird vorzugsweise die Gesamtmenge der Polyisocyanatkomponete B1) mit vorzugsweise der Gesamtmenge der zu Herstellung der NCO-Semiprepolymeren vorgesehenen Komponente B2) umgesetzt.

Die Herstellung der erfindungsgemäßen Elastomere erfolgt nach der bekannten Reaktionsspritzgußtechnik (RSG-Verfahren, "RIM-process"), wie sie beispielsweise in DE-AS 2 622 951 (US 4 218 543) oder DE-OS 39 14 718 beschrieben ist. Die Mengenverhältnisse der Komponenten A) und B) entsprechen hierbei den stöchiometrischen Verhältnissen mit einer NCO-Kennzahl von 80 bis 120. Die Menge des in die Form eingebrachten Reaktionsgemischs wird im übrigen so bemessen, dass die Formkörper eine Dichte von mindestens 0,8, vorzugsweise 1,0 bis 1,4 g/cm³ aufweisen. Die Dichte der resultierenden Formkörper hängt selbstverständlich in starkem Maß von der Art und dem Gewichtsanteil der mitverwendeten Füllkörper ab. Im Allgemeinen handelt es sich bei den erfindungsgemäßen Formteilen um mikrozellulare Elastomere, d.h. um keine echten Schaumstoffe mit dem bloßen Auge sichtbarer Schaumstruktur. Dies bedeutet, dass gegebenenfalls mitverwendete organische Treibmittel weniger die Funktion eines echten Treibmittels als vielmehr die Funktion eines Fließmittels ausüben.

Die Ausgangstemperatur des in die Form eingebrachten Reaktionsgemischs aus den Komponenten A) und B) liegt im allgemeinen bei 20 bis 80, vorzugsweise 30 bis 70°C. Die Temperatur der Form liegt im allgemeinen bei 30 bis 130, vorzugsweise 40 bis 80°C. Bei dem zum Einsatz gelangenden Formwerkzeugen handelt es sich um solche der an sich bekannten Art, vorzugsweise aus Aluminium oder Stahl oder um metallgespritzte Epoxidwerkzeuge. Zur Verbesserung der Entformungseigenschaften können die Innenwände der verwendeten Form gegebenenfalls mit bekannten äußeren Formtrennmitteln beschichtet werden.

Die in der Form entstehenden Formteile/Formkörper können im Allgemeinen nach einer Formstandzeit von 5 bis 180 Sekunden entformt werden. Gegebenenfalls schließt sich an der Entformung ein Tempern bei einer Temperatur von ca. 60 bis 180°C während eines Zeitraums von 30 bis 120 Minuten an.

Die erfindungsgemäßen verstärkten Polyurethanharnstoffelastomere werden zur Herstellung von Formkörpern/Formteilen in an sich bekannten Verfahren verwendet.

Die erhaltenen, vorzugsweise flächigen Formkörper eignen sich insbesondere zur Herstellung von insbesondere lackierten Bauteilen im Fahrzeugbereich, z.B. flexiblen Automobilfängerschürzen bzw. von flexiblen Karosserieelementen, wie Türen und Heckklappen oder Kotflügeln von Automobilen.

Die Erfindung soll anhand der nachfolgenden Beispiele näher erläutert werden.

### Beispiele

### Ausgangsmaterialien

### Semiprepolymer 1

1121 Gew.-Teile 4,4'-Diisocyanatodiphenylmethan werden bei 90°C mit 779 Gew.-Teilen des Polyetherpolyols 1 der Funktionalität 3 umgesetzt.
NCO-Gehalt nach 2 Stunden: 18,0 %

### Semiprepolymer 2

96,6 Gew.-Teile 4,4'-Diisocyanatodiphenylmethan werden bei 90°C mit 73,4 Gew.-Teilen des Polyetherpolyols 2 der Funktionalität 6 umgesetzt.
NCO-Gehalt nach 2 Stunden: 18,1 %

### Polyol 1

Polyetherpolyol der OH-Zahl 37, hergestellt durch Alkoxylierung von Glycerin als Starter im Verhältnis von 72 Gew.-% Ethylenoxid und 18 Gew.-% Propylenoxid mit überwiegend primären OH-Gruppen.

### Polyol 2

Polyetherpolyol der OH-Zahl 28, hergestellt durch Propoxylierung des hexafunktionellen Starters Sorbit mit Propylenoxid und anschließender Ethoxylierung im Verhältnis 83:17 mit überwiegend primären OH-Gruppen.

### DETDA

Mischung aus 80 Gew.-% 1-Methyl-3,5-diethyl-2,4-diaminobenzol und 20 Gew.-% 1-Methyl-3,5-diethyl-2,6-diaminobenzol

### DABCO 33 LV

Lösung von 1,4-Diazabicyclo[2.2.2]octan in Dipropylenglycol (Fa. Air Products)

### Jeffamin D400

Polyoxypropylendiamin (Fa. Texaco)

### DBTDL

Dibutylzinndilaurat

### Wollastonit

Tremin 939-955 der Fa. Quarzwerke, Frechen

Die Verarbeitung der in folgenden beschriebenen Rezepturen erfolgte durch Reaktionsspritzgußtechnik. Die A- und die B-Komponente werden in einem Hochdruckdosiergerät nach intensiver Vermischung in einem zwangsgesteuerten Mischkopf in ein geheiztes Plattenwerkzeug einer Formtemperatur von 60°C der Abmessungen 300 x 200 x 3 mm über einen Staubalkenanguß gerückt.

Die Temperatur der A-Komponente betrug 60°C, die Temperatur der B-Komponente betrug 50°C.

Die mechanischen Werte wurden nach Tempern in einem Umlufttrockenschrank (45 Min. bei 160°C) und anschließender Lagerung (24 Stunden) gemessen.

Vor jeder Serie wurde das Werkzeug mit dem Formtrennmittel RTWC 2006 der Fa. Chem Trend behandelt.

Die Mengenangaben in der Tabelle sind in Gewichtsteilen.

**Tabelle 1**

| Beispiel | 1 | 2 | 3 | 4 |
|---|---|---|---|---|
| | | | | (Vergleich) |
| Polyol 1 | 52,5 | 59,5 | 58 | - |
| Polyol 2 | - | - | - | 52,5 |
| DETDA | 42 | 35 | 35 | 42 |
| Zn-Stearat | 2 | 2 | 3,5 | 2 |
| Jeffamin D400 | 3 | 3 | 3 | 3 |
| Dabco 33 LV | 0,3 | 0,3 | 0,3 | 0,3 |
| DBTDL | 0,2 | 0,2 | 0,2 | 0,2 |
| Wollastonit | 57,1 | 52,5 | 52,5 | 56,6 |
| Semiprepolymer 1 | 128,4 | 110,3 | 110,1 | - |
| Semiprepolymer 2 | - | - | - | 126,4 |
| Wollastonit im Elastomer [Gew.-%] | 20 | 20 | 20 | 20 |
| Index | 105 | 105 | 105 | 105 |
| Oberflächenspannung der bei RT gelagerten Platten [mN/m] ¹⁾ | 34 | 34 | 34 | 34 |
| Oberflächenspannung nach Temperung bei 160°C und 45min [mN/m] ¹⁾ | 42 | 44 | 44 | <34 |

| | | | | |
|---|---|---|---|---|
| ¹⁾ Zur Messung der Oberflächenenergie wurde die Methode der Fa. Softal Electronic GmbH, D 21107 Hamburg, mit dem 34/56-Softal-Testtintenverfahren angewendet. | | | | |

Die Elastomere aus den Formulierungen 1 bis 4 zeigen ein gutes Trennverhalten (es sind mehr als 30 Teile der Form leicht zu entnehmen).

Die Elastomere aus den Formulierungen 1 bis 3 zeigen nach dem Tempern eine Oberflächenspanunng von über 40 mN/m. Der Vergleichsversuch 4 ergibt ein Elastomerteil mit Werten von 34 mN/m. Durch Tempern kann der Wert sogar noch weiter abfallen. Erst nach aufwändigem Reinigungsverfahren werden Formteile mit Oberflächenspannungen von knapp über 40 mN/m erhalten. Nach entsprechenden Oberflächenreinigungsverfahren werden in den erfindungsgemäßen Beispielen 1 bis 3 Werte von 56 mN/m erhalten.

Für eine gute Lackhaftung wird eine Oberflächenspannung von mindestens 42 mN/m angestrebt. Bei den erfindungsgemäßen Beispielen 1 bis 3 wird dieser Wert ohne Reinigungsverfahren erreicht.

Die sich anschließende Lackierung erfolgt nach den üblichen Verfahren im üblichen Schichtaufbau: Grundierung, Füller, Lackschicht(en) sowie Decklack, wie sie in der Lackiertechnik üblich sind. Das erfindungsgemäße Polyurethanharnstoffelastomer ist bezüglich seines Wärmestandverhaltens besonders gut geeignet, auch die Temperaturbelastung bei der Härtung der applizierten Einbrennlacke auszuhalten und ohne Schaden zu überstehen.

## Patentansprüche

1. Verstärkte Polyurethanharnstoffelastomere mit einem Harnstoffanteil im Bereich von 70 bis 95 Mol-% und einem Urethananteil im Bereich von 5 bis 30 Mol-%, bezogen auf Mol-% eines NCO-Äquivalents, erhältlich durch Umsetzung eines Reaktionsgemisches aus einer A-Komponente bestehend aus
A1) aromatischen Diaminen, die zumindest in jeweils einer ortho-Stellung zu den Aminogruppen einen Alkylsubstituenten aufweisen,
A2) einer aliphatischen Reaktionskomponente bestehend aus mindestens einem Hydroxyl- und/oder primäre Aminogruppen aufweisenden Polyetherpolyol der Molmasse 500 bis 18 000,
A3) gegebenenfalls aliphatischen Aminen,
A4) Verstärkungsstoffen sowie
A5) gegebenenfalls Katalysatoren und/oder Zusatzstoffen
A6) mindestens einem Metallsalz aus der Gruppe bestehend aus Verbindungen, die erhältlich sind aus
i) den Metallen Li, Mg, Ca, Ba, Zn, Cu, Fe, Co, Ni und
ii) Carbonsäuren mit 8 bis 40 C-Atomen, Phosphor enthaltenden Säuren mit 8 bis 40 C-Atomen oder Schwefel enthaltenden Säuren mit 8 bis 40 C-Atomen,
sowie einem Prepolymer als B-Komponente erhältlich aus
B1) einer Polyisocyanatkomponente bestehend aus einem verflüssigten Polyisocyanat oder Polyisocyanatgemisch der Diphenylmethanreihe und
B2) einer Polyolkomponente mit einer mittleren Molmasse von 500 bis 18 000, bestehend aus mindestens einem, gegebenenfalls organische Füllstoffe enthaltenden Polyetherpolyol,
**dadurch gekennzeichnet, dass** die Komponenten A2) und B2) eine Funktionalität von 2 bis 8 sowie einen Ethylenoxid-Gehalt von 40-100 Gew.-% und einen Alkyloxiran-Gehalt von 0-60 Gew.-% aufweisen, wobei die A-Komponente und die B-Komponente in einem solchen stöchiometrischen Mengenverhältnis umgesetzt werden, dass die Isocyanatkennzahl des erhaltenen Elastomeren im Bereich von 80 bis 120 liegt und die über die B-Komponente eingebrachte Polyolkomponente B2) 10 bis 90 Mol-% des Urethananteils darstellt.

2. Polyurethanformkörper/-teile aus verstärkten Polyurethanharnstoffelastomeren gemäß Anspruch 1.

3. Verwendung der Formteile/-körper gemäß Anspruch 2 zur Herstellung von lackierten Bauteilen für die Fahrzeugindustrie.

## Claims

1. Reinforced polyurethane-urea elastomers with a urea content ranging from 70 to 95 mol% and a urethane content ranging from 5 to 30 mol%, based on mol% of an NCO equivalent, said elastomers being obtainable by reacting a reaction mixture of a component A consisting of
A1) aromatic diamines having an alkyl substituent in at least one ortho position to the amino groups,
A2) an aliphatic reactant consisting of at least one polyetherpolyol of molecular weight 500 to 18,000 having hydroxyl and/or primary amino groups,
A3) optionally aliphatic amines,
A4) reinforcing agents,
A5) optionally catalysts and/or additives, and
A6) at least one metal salt from the group comprising compounds obtainable from
i) the metals Li, Mg, Ca, Ba, Zn, Cu, Fe, Co and Ni, and
ii) carboxylic acids having 8 to 40 C atoms, phosphorus-containing acids having 8 to 40 C atoms or sulfur-containing acids having 8 to 40 C atoms,
and a prepolymer component B obtainable from
B1) a polyisocyanate component consisting of a liquefied polyisocyanate or polyisocyanate mixture of the diphenylmethane series, and
B2) a polyol component of average molecular weight 500 to 18,000 consisting of at least one polyetherpolyol optionally containing organic fillers,
**characterized in that** the components A2) and B2) have a functionality of 2 to 8, an ethylene oxide content of 40-100 wt.% and an alkyloxirane content of 0-60 wt.%, the component A and the component B being reacted in stoichiometric proportions such that the isocyanate index of the elastomer obtained ranges from 80 to 120 and the polyol component B2) introduced via the component B is 10 to 90 mol% of the urethane content.

2. Polyurethane mouldings made of reinforced polyurethane-urea elastomers according to Claim 1.

3. Use of the mouldings according to Claim 2 for the production of lacquered components for the vehicle industry.

## Revendications

1. Élastomères polyuréthane-urée renforcés ayant une fraction d'urée dans le domaine de 70 à 95 % en mol et une fraction d'uréthane dans le domaine de 5 à 30 % en mol par rapport au % en mol d'un équivalent de NCO, pouvant être obtenu par réaction d'un mélange réactionnel d'un constituant A constitué par
A1) des diamines aromatiques qui présentent un substituant alkyle au moins à chaque fois en une position ortho par rapport aux groupes amine,
A2) un constituant de réaction aliphatique constitué d'au moins un polyétherpolyol présentant des groupes hydroxyle et/ou amino primaire et ayant une masse molaire de 500 à 18 000,
A3) éventuellement des amines aliphatiques,
A4) des agents renforçants et
A5) éventuellement des catalyseurs et/ou des additifs,
A6) au moins un sel métallique du groupe constitué par des composés pouvant être obtenus à partir
i) des métaux Li, Mg, Ca, Ba, Zn, Cu, Fe, Co, Ni et
ii) d'acides carboxyliques ayant 8 à 40 atomes de carbone, d'acides contenant du phosphore et ayant de 8 à 40 atomes de carbone ou d'acides contenant du soufre et ayant de 8 à 40 atomes de carbone;
et d'un prépolymère comme constituant B, pouvant être obtenu à partir
B1) d'un constituant polyisocyanate constitué d'un polyisocyanate ou mélange de polyisocyanates liquéfiés de la série du diphénylméthane et
B2) d'un constituant polyol ayant une masse molaire moyenne de 500 à 18 000, constitué d'au moins un polyétherpolyol contenant éventuellement des charges organiques,
**caractérisé en ce que** les constituants A2) et B2) ont une fonctionnalité de 2 à 8 et une teneur en oxyde d'éthylène de 40-100 % en masse et une teneur en alkyloxirane de 0-60 % en masse, le constituant A et le constituant B étant mis à réagir en des proportions stoechiométriques telles que l'indice d'isocyanate de l'élastomère obtenu se situe dans le domaine de 80 à 120 et le constituant polyol B2) introduit par le constituant B représente 10 à 90 % en mol de la fraction uréthane.

2. Corps/pièces moulé(e)s en élastomère polyuréthane-urée renforcé selon la revendication 1.

3. Utilisation des corps/pièces moulé(e)s selon la revendication 2 pour la fabrication d'éléments laqués pour l'industrie automobile.
